# EUROPEAN PATENT APPLICATION

(11) **EP 2 849 498 A1**
(43) Date of publication of application: **18.03.2015**
(21) Application number: 13782089.0
(22) Date of filing: 25.04.2013
(51) Int. Cl.: H04W 48/16

(54) **METHOD OF ACCESSING, BY WIRELESS DEVICE, INFORMATION MAPPED TO CURRENTLY POSITIONED SPACE BY USING NETWORK ACCESS DEVICE, AND DEVICE FOR ACCESSING INFORMATION MAPPED TO CURRENTLY POSITIONED SPACE BY USING NETWORK ACCESS DEVICE**

(30) Priority: 25.04.2012 KR 20120043274
(71) Applicant: PeopleBee Inc., Seoul 150-102 (KR)
(72) Inventor: PeopleBee Inc., Seoul 150-102 (KR)
(74) Representative: Merryweather, Colin Henry
(86) International application number: PCT/KR2013/003589
(87) International publication number: WO 2013/162314

(57) **Abstract**

The present invention relates to a method and device for accessing mapped information by using a network access device on a communication network. A method of accessing information mapped to a currently positioned space by a wireless device that uses the network access device includes: accessing network access device identification information (NADII) on one or more network access devices (NADs) that are searched through wireless scanning at the current position by the wireless device in order to access information mapped to a currently positioned space by the wireless device; and accessing information mapped to the NADII for each of pieces of NADII on the accessed network access devices.

## Description

### Technical Field

The following description relates to a method and device for accessing mapped information by using a Network Access Device (NAD) on a communication network.

### Background Art

Due to development of wireless communication technologies, portable wireless devices, for example smartphones, tablet computers, or notebook computers, may exchange a variety of information with each other while moving. Also, due to the development of wireless communication technologies, a relatively large amount of information may be transmitted.

Additionally, a business platform to share information and form a relationship using a portable wireless device has emerged. The business platform may include, for example a Social Network Service (SNS) and a social commerce.

Furthermore, to search for information using a portable wireless device, a search scheme of using a keyword in a mobile search site is being mainly used.

### Disclosure of Invention

### Technical Goals

An aspect of the present invention provides a method of mapping information to a Network Access Device (NAD), based on Network Access Device Identification Information (NADII) on the NAD.

Another aspect of the present invention provides a method of accessing information mapped to a NAD, based on NADII on the NAD.

Still another aspect of the present invention provides a method of utilizing a NAD as a communication node and a source for information acquisition, by accessing information mapped to NADs accessible by a wireless device.

### Technical solutions

In one general aspect, there is provided a method of accessing information mapped to a space in which a wireless device is currently located, by the wireless device using a NAD in the wireless device, the method including: accessing pieces of NADII on one or more NADs among pieces of NADII of NADs found through wireless scanning by the wireless device at a current location of the wireless device, to access information mapped to the space; and accessing pieces of information mapped to the pieces of NADII for each of the accessed pieces of NADII.

The accessing of the pieces of information mapped to the pieces of NADII may include accessing pieces of information stored in a storage medium based on the pieces ofNADII.

The accessing of the pieces of information mapped to the pieces ofNADII may include identifying a location in which the pieces of information are stored, based on the pieces ofNADII.

The method may further include mapping information to the space based on the accessed pieces ofNADII.

The mapping of the information to the space based on the pieces ofNADII may include mapping the information to NADs located in the space.

The mapping of the information to the space based on the pieces ofNADII may include mapping the information to specific NADs or a portion of NADs located in the space.

One or more NADs located in the space may be found through active scanning or passive scanning in the space.

The mapping of the information to the space based on the accessed pieces of NADII may include transmitting, to a server, a storage request to map the information to the pieces ofNADII and store the mapped information, the storage request including the information to be mapped.

The storage request may include one or more pieces of NADII among the accessed pieces ofNADII.

The accessing of the pieces of information stored in the storage medium based on the pieces ofNADII may include setting the pieces ofNADII and the stored pieces of information as first information and second information, respectively, and accessing the second information based on the first information.

The method may further include setting the pieces of NADII and the stored pieces of information as first information and second information, respectively, and storing the second information in the storage medium based on the first information.

When the pieces of NADII and the stored pieces of information are set as first information and second information, respectively, the first information may include the second information to be accessed or stored.

When the pieces of NADII and the stored pieces of information are set as first information and second information, respectively, the first information may include location information on the second information to be accessed or stored.

The location information on the second information may include information on a location in which the second information is stored, or information on a location in which the second information is to be stored.

The location information on the second information may include information regarding a server, a database, a file, a table, and a data structure in which the second information is stored, or an arbitrary combination thereof.

The location information on the second information may include information used to identify or determine a location of the second information.

The location information on the second information may include information on a procedure or a protocol of accessing the second information, or information used to identify or determine the procedure and the protocol.

The accessing of the second information based on the first information may include performing an operation or a procedure on the first information to identify NADII used to access the second information, and setting a result obtained by the operation or the procedure as new first information and accessing the second information based on the new first information.

The accessing of the second information based on the first information may include performing an operation or a procedure based on the first information, to access the second information.

The accessing of the second information based on the first information may include sending a request for information to a server, a server process or a server process of the server, based on the first information, to identify NADII used to access the second information, and setting a reply to the request as new first information and accessing the second information based on the new first information.

The accessing of the second information based on the first information may include sending a request for information to a server, a server process or a server process of the server, based on the first information, to access the second information, and setting a reply to the request as new first information and accessing the second information based on the new first information.

The sending of the request for information to the server, the server process or the server process of the server based on the first information may include identifying or determining the server, the server process or the server process of the server, based on the first information.

The sending of the request for information to the server, the server process or the server process of the server based on the first information may include identifying or determining a procedure of sending the request for information to the server, the server process or the server process of the server, or how to make the request for information, based on the first information.

The accessing of the second information based on the first information may include sending a request for an access service to a server, a server process or a server process of the server, based on the first information, to request the access service.

The accessing of the second information based on the first information may include accessing third information based on the first information, and setting the third information as new first information and accessing the second information based on the new first information.

The accessing of the second information based on the first information may include using the first information to acquire a key value or a part of the key value, the key value being used to access the second information stored in a predetermined database or a specific database.

The accessing of the second information based on the first information may include setting the first information as a key value of a database or a part of the key value, and accessing the second information stored in a predetermined database or a specific database.

The accessing of the second information based on the first information may include executing a predetermined operation or applying a predetermined procedure, to access the second information.

The accessing of the second information based on the first information may include performing an operation or a procedure of accessing information including location information on the second information or the second information, based on the first information.

The accessing of the pieces of information stored in the storage medium based on the pieces of NADII may include using the pieces of NADII to read the information stored in the storage medium.

The accessing of the pieces of information mapped to the pieces of NADII may include reading pieces of information stored in a server based on the pieces of NADII.

The accessing of the pieces of information mapped to the pieces of NADII may include reading pieces of information stored in a database based on the pieces of NADII.

The accessing of the pieces of information stored in the database based on the pieces of NADII may include using the pieces of NADII to acquire a key value or a part of the key value, the key value being used to access the pieces of information stored in the database.

The accessing of the pieces of information mapped to the pieces of NADII for each of the pieces of NADII may include transmitting, to a server, a read request to access the pieces of information mapped to the pieces of NADII and stored, and receiving, from the server, the pieces of information mapped to the pieces of NADII and stored, in response to the read request.

The read request may include one or more pieces of NADII among the accessed pieces of NADII.

The method may further include displaying the accessed pieces of information on the wireless device.

The displaying of the accessed pieces of information may include displaying the accessed pieces of information in a preset order.

The displaying of the accessed pieces of information in the preset order may include displaying the accessed pieces of information, based on the pieces of NADII to which the pieces of information are mapped and a type of the pieces of information, or in an order of time in which the pieces of information are mapped or in a reverse order to the order of the time.

The mapping of the information to the space based on the accessed pieces of NADII may further include receiving an input of information to be mapped to the space so that the wireless device maps the information to the space.

The receiving of the input of the information to be mapped to the space may further include receiving an input from the device.

The receiving of the input of the information to be mapped to the space may further include receiving an input from a device connected to a server to map and store the information.

The receiving of the input of the information to be mapped to the space may further include receiving an input from a device connected via a network to a server to map and store the information.

The accessing of the pieces of NADII may include accessing pieces of NADII on one or more NADs among NADs found through wireless scanning in a series of locations of the wireless device during a period from a first point in time to a second point in time.

The accessing of the pieces of NADII may include marking one or more specific pieces of NADII on NADs found through wireless scanning at a first point in time, and accessing the marked pieces of NADII at a second point in time after the first point in time.

The accessing of the pieces of NADII may include marking one or more specific pieces of NADII on NADs found through wireless scanning during a period from a first point in time to a second point in time, and accessing the marked pieces of NADII at an arbitrary point in time after the second point in time.

Mapping of information to the space may include mapping, by arbitrary wireless devices located in an arbitrary space, arbitrary information to one or more specific pieces of NADII on NADs located in the space.

When at least two different wireless devices access, that is, perform a read operation on pieces of information mapped to the same NADII at the same point in time, the pieces of information obtained by the read operation may be identical to each other, in the pieces of information mapped to the space.

In the information mapped to the space, when a first wireless device maps first information to a space in which the first wireless device is located, at a first point in time, when each of one or more different wireless devices accesses the mapped pieces of information in a location of the first wireless device at the first point in time, at an arbitrary point in time after the first point in time, when the first information is mapped at an arbitrary point in time after the first point in time in the same space environment, that is, when the space remains unchanged after the first point in time, that is, when NADs in the space, an arrangement, configurations and settings of the NADs, and pieces of NADII on the NADs remain unchanged, and when the same mapping is performed at an arbitrary point in time after the first point in time, that is, when the same result is obtained by mapping the first information to pieces of Identification Information (II) representing the space, that is, when the mapping is not modified or removed and the first information and the pieces of II used in the mapping are not corrected or deleted after the first point in time, each of the pieces of information accessed by the different wireless devices may include the first information or a portion of the first information.

The method may further include marking one or more specific pieces of NADII on NADs accessible by the wireless device, and accessing pieces of information mapped to the marked pieces of NADII, based on the marked pieces of NADII, when the wireless device is beyond a radio coverage of the NADs.

In the information mapped to the space, when a first wireless device accesses pieces of first NADII on one or more NADs among NADs found through wireless scanning in a current location of the first wireless device, to map information to a space in which the first wireless device is currently located at a first point in time, and maps first information to the accessed pieces of first NADII, when a second wireless device accesses pieces of second NADII on one or more NADs among NADs found through wireless scanning in a current location of the second wireless device, to access information mapped to a space in which the second wireless device is currently located at a second point in time after the first point in time, and accesses pieces of information mapped to the accessed pieces of second NADII, when a space environment in which the first information is mapped remains unchanged at an arbitrary point in time between the first point in time and the second point in time, that is, when NADs in a space in which the first information is mapped, an arrangement, configurations and settings of the NADs, and pieces of NADII on the NADs remain unchanged, when the same result is obtained by mapping the first information to the pieces of first NADII at an arbitrary point in time between the first point in time and the second point in time, that is, when the mapping is not modified or removed and the first information and the pieces of first NADII used in the mapping are not corrected or deleted, and when at least one piece of NADII is included in common in both the pieces of first NADII and second NADII, the pieces of information mapped to the pieces of second NADII accessed by the second wireless device may include the first information or a portion of the first information.

In the information mapped to the space, when a first wireless device accesses pieces of first NADII on one or more NADs among NADs found through wireless scanning in a current location of the first wireless device, to map information to a space in which the first wireless device is currently located at a first point in time, and maps first information to the accessed pieces of first NADII, when a 2a-th wireless device accesses pieces of 2a-th NADII on one or more NADs among NADs found through wireless scanning in a current location of the 2a-th wireless device, to map information to a space in which the 2a-th wireless device is currently located at a 2a-th point in time after the first point in time, and maps pieces of 2a-th information mapped to the accessed pieces of 2a-th NADII, when a third wireless device accesses pieces of third NADII on one or more NADs among NADs found through wireless scanning in a current location of the third wireless device, to access information mapped to a space in which the third wireless device is currently located at a third point in time after the 2a-th point in time, and accesses pieces of information mapped to the accessed pieces of third NADII, when a space environment in which the first information is mapped remains unchanged at an arbitrary point in time between the first point in time and the third point in time, that is, when NADs in a space in which the first information is mapped, an arrangement, configurations and settings of the NADs, and pieces of NADII on the NADs remain unchanged, when the same result is obtained by mapping the first information to the pieces of first NADII at an arbitrary point in time between the first point in time and the third point in time, that is, when the mapping is not modified or removed and the first information and the pieces of first NADII used in the mapping are not corrected or deleted, when a space environment in which the 2a-th information is mapped remains unchanged at an arbitrary point in time between the 2a-th point in time and the third point in time, that is, when NADs in a space in which the 2a-th information is mapped, an arrangement, configurations and settings of the NADs, and pieces of NADII on the NADs remain unchanged, when the same result is obtained by mapping the 2a-th information to the pieces of 2a-th NADII at an arbitrary point in time between the 2a-th point in time and the third point in time, that is, when the mapping is not modified or removed and the 2a-th information and the pieces of 2a-th NADII used in the mapping are not corrected or deleted, when at least one piece of NADII is included in common in both the pieces of first NADII and third NADII, the pieces of information mapped to the pieces of third NADII accessed by the third wireless device may include the first information or a portion of the first information, and when at least one piece of NADII is included in common in both the piece of 2a-th NADII and third NADII, the pieces of information mapped to the pieces of third NADII accessed by the third wireless device may include the 2a-th information or a portion of the 2a-th information.

The NADs may be accessed to allow the wireless device to access a communication network, and may perform a function specified in a specific communication protocol or a function required to access the communication network.

NADII on a NAD may include an identifier of the NAD or a part of the identifier.

NADII on a NAD may include a name or an address of a protocol used by the NAD.

NADII on a NAD may include coordinate information of a Global Positioning System (GPS) of the NAD.

The coordinate information of the GPS may include GPS coordinate values of the NAD.

The GPS coordinate values of the NAD may include GPS coordinate values in a range of a predetermined digit number in the GPS coordinate values.

NADII on a NAD may include access information or setting information on the NAD that are used to access a communication network.

The access information may include a value used to operate or use a specific communication protocol in the NAD, and may be mandatory information or optional information required or specified in the specific communication protocol. The setting information may include settable information among the mandatory information or the optional information.

NADII on a NAD may include at least one of a network identifier, a service identifier, a Service Set IDentifier (SSID), an Internet Protocol (IP) version 4 (IPv4) address, an IP version 6 (IPv6) address and a Medium Access Control (MAC) address.

NADII on a NAD may include at least one of a Basic Service Set IDentifier (BSSID), a MAC address, and an SSID of an Access Point (AP) of a Wireless Fidelity (Wi-Fi) or a Wireless Local Area Network (WLAN).

The mapped information may include a character, a number, a symbol, voice, sound, an image, or an arbitrary combination of images.

The mapped information may include a tag, an icon, a Universal Resource Locator (URL) and contents including a character, a number, a symbol, voice, sound, an image, or an arbitrary combination of images, may include an index indicating a location of the information, or may include a portion of the contents, the tag, the icon, the URL, and the index.

The mapped information may include II or a part of the II. The II may include user II, file II, protocol II, server II, application service II, or application service server II for an application service.

The II may include at least one of a user identifier, a username, a file identifier, a file name, a protocol identifier, a protocol name, a server identifier, a server name, an application service identifier, an application service name, an application service server identifier (identifier for an application service server), an application service server name (service name for an application service), and IP addresses of an application service server.

The contents may include an arbitrary combination of one or more contents with an icon or a tag. A plurality of tags may be provided, and may be associated with information of the contents. A plurality of icons may be provided, and may be associated with attributes and sort of the contents.

The application service may include a web service, a printing service, a file storage service, a file transmission and sharing service, a cloud service, a home networking service, a Near Field Communication (NFC) service, a coupon providing service, a ticket providing service, or a remote access service.

The accessing of the pieces of information mapped to the accessed pieces of NADII may include performing user authentication for an access of a server to execute or provide an application service.

The method may further include transmitting, to an application service server, a request to execute an application service available in the space.

The method may further include displaying, on the wireless device, one or more application services available in the space.

The displaying of the available application services may further include executing a specific application service selected from among the available application services.

The displaying of the available application services may further include transferring, to the application service server, a command or a parameter preset to execute the application service.

The displaying of the available application services may further include performing user authentication for an access of a server to execute or provide the application service.

The executing of the specific application service selected from among the available application services may include executing the application service by accessing an application service server of the specific application service.

The method may further include mapping activation information or execution information to one or more specific pieces of NADII so that a specific application service is activated or executed.

The method may further include allowing a specific application service server to access a specific piece of NADII.

In another general aspect, there is provided a device for accessing information mapped to a space in which a wireless device is currently located, by using a NAD, the device including: an identification information access unit to access pieces of NADII on one or more NADs among NADs found through wireless scanning by the wireless device at a current location of the wireless device to access information mapped to the space; and a mapping information access unit to access pieces of information mapped to the pieces of NADII for each of the accessed pieces of NADII.

The mapping information access unit may access pieces of information stored in a server, based on the pieces of NADII.

The device may further include an input unit to receive an input of information to be mapped to the space.

The device may further include a display unit to display the accessed pieces of information on the wireless device.

The device may further include an authentication unit to perform user authentication for an access of a server to execute or provide an application service.

The device may further include a mapping unit to map activation information or execution information to one or more specific pieces of NADII so that a specific application service is activated or executed.

The device may further include a control unit to mark pieces of NADII on NADs accessible by the wireless device, and to determine whether to access pieces of information mapped to the marked pieces of NADII based on the marked pieces of NADII, when the wireless device is beyond a radio coverage of the NADs.

In another general aspect, there is provided a method of accessing information mapped to a space in which a wireless device is currently located, by using a NAD, the method including: mapping predetermined information and NADII on a NAD; receiving a request for information mapped to the NADII from at least one wireless device located in a radio coverage of the NAD; searching for the mapped information based on the NADII, in response to the request; and transmitting the found information to the wireless device.

The method may further include receiving the predetermined information and the NADII from the wireless device.

The method may further include accessing the mapped information in response to the request received from the wireless device.

The predetermined information may include at least one of II, indices indicating a location of information, a tag, an icon, a URL and contents including a character, a number, a symbol, voice, sound, an image, or an arbitrary combination of images.

The II may include at least one of a user identifier, a username, a file identifier, a file name, a protocol identifier, a protocol name, a server identifier, a server name, an application service identifier, an application service name, an application service server identifier (identifier for an application service server), an application service server name, and IP addresses of an application service server.

The contents may include an arbitrary combination of one or more contents with an icon or a tag. A plurality of tags may be provided, and may be associated with information of the contents. A plurality of icons may be provided, and may be associated with attributes and sort of the contents.

The application service may include at least one of a web service, a printing service, a file storage service, a file transmission and sharing service, a cloud service, a home networking service, an NFC service, a coupon providing service, a ticket providing service, and a remote access service.

### Effects of the Invention

According to embodiments of the present invention, it is possible to map information to a Network Access Device (NAD), based on a part or all of Network Access Device Identification Information (NADII) on the NAD.

Additionally, according to embodiments of the present invention, it is possible to access information mapped to a NAD, based on NADII on the NAD.

Furthermore, according to embodiments of the present invention, it is possible to utilize a NAD as a communication node and a source for information acquisition, by acquiring information mapped to NADs accessible by a wireless device.

Moreover, according to embodiments of the present invention, it is possible to perform a chat with a user accessing a NAD by acquiring a list of users accessing the NAD.

In addition, according to embodiments of the present invention, it is possible to mark NADII on a NAD, and to access information mapped to the NADII even outside a radio coverage of the NAD.

### Brief Description of Drawings

FIGS. 1A and 1B illustrate a communication network environment to which a method of accessing information mapped to a space in which a wireless device is currently located, by using a Network Access Device (NAD) in the wireless device is applicable according to an embodiment.
FIG. 2 is a block diagram illustrating an example of a device for accessing information mapped to a space in which the device is currently located, by using a NAD according to an embodiment.
FIG. 3 is a block diagram illustrating another example of a device for accessing information mapped to a space in which the device is currently located, by using a NAD according to an embodiment.
FIG. 4 is a block diagram illustrating still another example of a device for accessing information mapped to a space in which the device is currently located, by using a NAD according to an embodiment.
FIG. 5 illustrates a process of mapping information to access information, setting information or additional information on a NAD according to an embodiment.
FIG. 6 illustrates an example of information mapped to a NAD according to an embodiment.
FIG. 7 illustrates information mapped for each of NADs according to an embodiment.
FIG. 8 illustrates information including a tag mapped to a NAD according to an embodiment.
FIG. 9 illustrates a process by which a wireless device accesses information mapped to a space in which the wireless device is currently located, by using a NAD, when a remote access is allowed, according to an embodiment.
FIG. 10 illustrates an example of an application of a method of accessing information mapped to a space in which a wireless device is currently located, by using a NAD, in the wireless device according to an embodiment.
FIG. 11 illustrates another example of an application of a method of accessing information mapped to a space in which a wireless device is currently located, by using a NAD, in the wireless device according to an embodiment.
FIG. 12 is a flowchart illustrating a method of accessing information mapped to a space in which a wireless devices are currently located, by using a NAD in the wireless device according to an embodiment.
FIG. 13 illustrates an example of a method of accessing an application service mapped to a space in which a wireless device is currently located, by using a NAD in the wireless device according to an embodiment.
FIGS. 14 and 15 illustrate a method of mapping information to a space in which each of a plurality of wireless devices is currently located, or of accessing mapped information, by using NADs in the wireless devices according to an embodiment.

### Best Mode for Carrying Out the Invention

The following detailed description is provided in order to explain the example embodiments by referring to the figures.

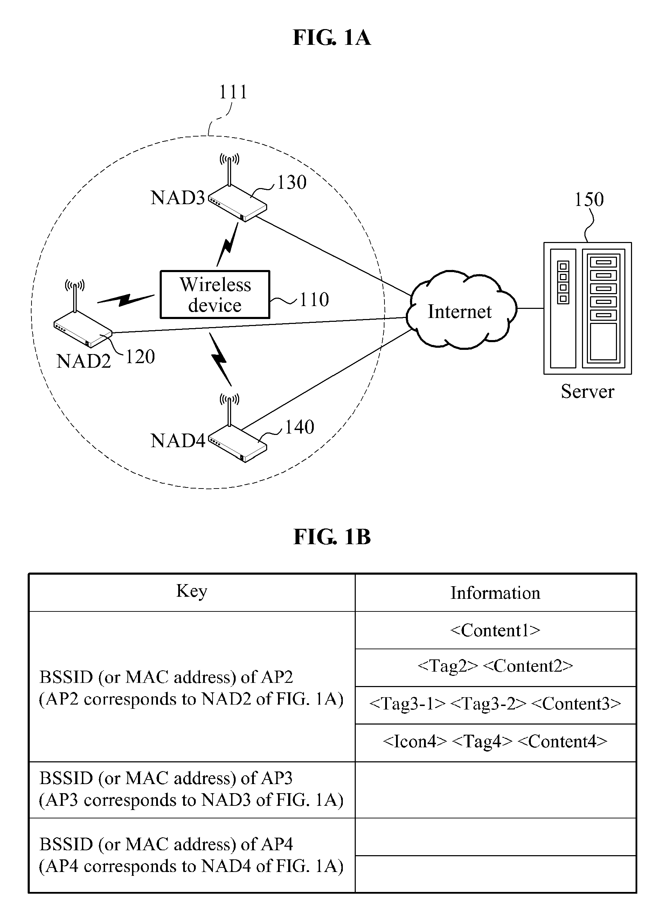

FIGS. 1A and 1B illustrate a communication network environment to which a method of accessing information mapped to a space in which a wireless device is currently located, by using a Network Access Device (NAD) in the wireless device is applicable according to an embodiment.

A NAD may be used to allow the wireless device to access a communication network using a specific communication protocol, and may perform a function specified in the specific communication protocol. For example, in a Wireless Fidelity (Wi-Fi) communication network, an Access Point (AP) may be used as a NAD. The wireless device may access the Wi-Fi communication network through the AP. To access other various communication networks, various NADs may be used. Examples of NADs are shown in Table 2.

Referring to FIG. 1A, NADs, for example, a NAD2 120, a NAD3 130 and a NAD4 140 may be found through wireless scanning 111 in a current location of a wireless device 110. A communication network may be used using one of the NADs. The expression "being found through scanning" may be used to refer to "being found through active scanning or passive scanning."

The wireless device 110 may search for or call information stored in a server 150 or a database, based on a used application program. In the related art, information stored in the server 150 may be irrelevant to the NAD2 120, the NAD3 130 and the NAD4 140. In other words, the NAD2 120, the NAD3 130 and the NAD4 140 may merely function as communication nodes to access the communication network.

A basic concept of a method of accessing information using a NAD according to an embodiment may be correlating the information stored in the server 150 with the NAD2 120, the NAD3 130 and the NAD4 140. Information stored in the server 150 may include, for example, a character, a number, a symbol, voice, sound, images, or an arbitrary combination of images. Additionally, the server 150 may store contents, a tag, an icon, a Universal Resource Locator (URL), an index indicating a location of information, and Identification Information (II).

Information may include an application service executable in the wireless device 110. The application service may include, for example, a web service, a printing service, a file storage service, a file transmission and sharing service, a cloud service, a home networking service, a Near Field Communication (NFC) service, a coupon providing service, a ticket providing service, or a remote access service.

In the following description, an associative relationship between information and an AP as an example of a NAD will be described based on the AP, if necessary. As a NAD, corresponding access devices of various communication network as well as the AP may be used.

Referring to FIG. 1B, a key and information may be mapped to each other, and may be stored in a database of the server 150. When the NAD2, the NAD3, and the NAD4 of FIG. 1A are APs, that is, when an AP2 corresponds to the NAD2, an AP3 corresponds to the NAD3, and when an AP4 corresponds to the NAD4, a key may include II on an AP. For example, a Basic Service Set IDentifier (BSSID) or a Medium Access Control (MAC) address of the AP2 may be used as a key. Similarly, a BSSID or a MAC address of the AP3 may be used as a key. Additionally, a BSSID or a MAC address of the AP4 may be used as a key. A part of II of an AP may be used as a key.

Information may include only contents, or may include contents together with one or more tags. Additionally, contents may include one or more icons. For example, content 1 may be mapped to the BSSID or the MAC address of the AP2. However, content 2 may be stored together with <tag 2> of the content 2 in a content field of the database. <Tag 2> may be a keyword associated with information of the content 2. Content 3 may be stored together with <tag 3-1> and <tag 3-2> in the content field of the database. Content 4 may be stored together with <tag 4> and <icon 4> in the content field of the database. <Icon 4> may be, for example, a shape associated with contents of <tag 4>, or an arbitrary icon.

In FIG. 1B, the key and the contents are mapped to each other, however, the key may be mapped to a storage location of the contents, an operation of the contents, a parameter of an operation of the contents, and the like, as well as the contents.

Access information may be required to access a NAD, and may refer to optional information or mandatory information specified in a specific communication protocol to operate or use the specific communication protocol in a NAD.

Setting information may refer to information set in a NAD in a user or a specific communication protocol, and may include, for example, an address, an identifier, or a name that is specified, used, or assigned in communication protocols or application services.

For example, in a BSSID as access information of an AP, the BSSID may typically have the same value as a MAC address of the AP. The BSSID may be 48 bits, and may have, for example, a form of E3-F4-9E-18-D2-7A. A bit number assigned to the BSSID may not be limited to 48-bit number. Various bits may be assigned to the BSSID.

A portion or all of the BSSID of 48 bits, that is, 6 bytes may be mapped to information. For example, when a BSSID is E3-F4-9E-18-D2-7A, when information is "file1.txt," and when the BSSID and the information are stored in "/src/data/file1.txt" of a server A, a first byte E3 may be mapped to a server identifier "server A," a second byte F4, a third byte 9E and a fourth byte 18 may be mapped to a storage path "/src/data," and a fifth byte D2 and a sixth byte 7A may be mapped to a file identifier "file1.txt." Mapping may be automatically performed in a program, or may be manually performed by a user of the wireless device 110.

A Service Set Identification (SSID) may be used as setting information on an AP. An SSID of an AP may be represented by a character string with a maximum length of 32 characters, and may be set by a user or a communication protocol, for example, ollehWiFi, NETSPOT, anygate or iptime.

Additionally, the SSID may be set by an address of a web page, for example, "http://www.global.org." In an example, a predetermined web page may be mapped to iptime. In another example, the character string with the 32 characters may be divided into several portions, and the portions may be mapped to a server identifier, a storage path, and an application program.

For example, II on an AP may be mapped to information, based on an access target of Table 1.

**[Table 1]**

| Access target | Mapping identifier | Mapping method | Access protocol |
|---|---|---|---|
| Filename | Partial or Full | Direct or Indirect | Simple file access, http, ftp or other schemes, etc. |
| Service name | | | |
| Index | | | |

Referring to Table 1, a filename, a service name, and an index may be used as an access target to be accessed. The access target may be mapped to partial or full II on the AP. When information is a filename or a service name, the wireless device 110 may access a corresponding file or a corresponding service. However, when information is an index, the wireless device 110 may need to interpret another information source indicated by the index. The above mapping scheme using an index may be referred to as indirect mapping. Conversely, a mapping scheme of enabling a direct access may be referred to as direct mapping.

An access protocol may also be mapped to partial or full II on the AP.

Partial or full II on the AP may be mapped to a partial path or a full path in which information is stored.

For example, a default web page may be assumed as information. When a default web page of a predetermined web is accessed, various schemes may be used to display a path. The default web page may be assumed as "home.html."

### (1) http://www.example.com/-home.html

In the case (1), an access protocol is "http," an address of a server is "www.example.com," and the default web page is shown. Additionally, ∼ indicates a default directory.

### (2) www.example.com/-home.html

In the case (2), an access protocol and a path prior to a location of "home.html" are set in advance as a default.

### (3)www.example.com/absolute_directory/absolute_path/home.html

In the case of (3), an access protocol is set in advance as a default, and a server and a path prior to a location of "home.html" are displayed.

For example, when a BSSID on an accessed AP is "E3-F4-9E-18-D2-7A," and when information is stored in "/src/data/file1.txt" of a server A, the BSSID and the information may be mapped to each other so that a first byte of the BSSID may be mapped to a server name, that a second byte through a fourth byte may be mapped to a path, and that a fifth byte and a sixth byte may be mapped to a filename.

In this example, E3 may be mapped to the server A, F4-9E-18 may be mapped to "/src/data," and D2-7A may be mapped to "file1.txt." In addition, an access protocol may be set in advance as a default.

In another example, the first byte and the second byte may be mapped to the service name, the third byte and the fourth byte may be mapped to the path, and the fifth byte and the sixth byte may be mapped to the filename. In other words, E3-F4 may be mapped to the server A, 9E-18 may be mapped to "/src/data," and D2-7A may be mapped to "file1.txt."

In still another example, the server A and a directory "/src" may be set in advance as defaults, and the first byte through the third byte may be mapped to the path, and the fourth byte through the sixth byte may be mapped to the filename. In other words, E3-F4-9E may be mapped to a directory "∼/data", and 18-D2-7A may be mapped to "file1.txt."

The wireless device 110 may access a file corresponding to "file1" by interpreting the BSSID based on a preset mapping operation, procedure or method. The mapping operation, procedure or method may be variously determined for each case.

When the server A, and a directory "/src/data" are set in advance as defaults, and when a filename is "fileABC.txt," E3-F4-9E-18-D2-7A may be mapped to "ABC" of "fileABC.txt." The wireless device 110 may interpret E3-F4-9E-18-D2-7A, and may access fileABC.txt among files.

The wireless device 110 may access information mapped to the AP. The wireless device 110 may access II on the AP, and may access the information mapped to the AP, based on the accessed II.

The wireless device 110 may access the II on the AP, through active scanning or passive scanning.

The AP may periodically or aperiodically broadcast a beacon frame. The access information and setting information may be included in the beacon frame. The passive scanning may refer to a scheme of acquiring information through reception of a beacon frame, and the active scanning may refer to a scheme of acquiring information from a reply frame of an AP corresponding to a request of the wireless device 110.

For example, the wireless device 110 may access a MAC address, may interpret a portion or all portions of the MAC address as a filename located in a specific directory of the server 150, and may access a file in the server 150. When a file corresponding to the filename does not exist, the wireless device 110 may generate a file with the filename. The server 150 and the specific directory may be set in advance as defaults on a program.

The wireless device 110 may access an SSID on the AP, and may access a file partially or fully mapped to the SSID, based on a preset mapping criterion. The SSID may typically include a character string. When the wireless device 110 acquires an SSID, contents of the SSID may be executed based on a preset interpretation scheme. For example, when an SSID on an AP is set in advance to be interpreted as a URL, the wireless device 110 may access a web page on the URL corresponding to the SSID. Additionally, the wireless device 110 may display the accessed web page on a screen.

Table 2 shows examples of various communication networks, various NADs, access information, and setting information.

**[Table 2]**

| Communication network | NAD | Access information or Setting information |
|---|---|---|
| Wi-Fi (WLAN) | AP (Access Point) | SSID ex. ollehWiFi |
| | | MAC address (48 bit) |
| | | BSSID |
| LTE (4G) | eNB, e-NodeB, eNodeB, Base station | eNB ID (20 bit) |
| | | Cell ID (8 bit) |
| | | ECGI (E-Utran Cell Global ID) |
| | | MAC address |
| 3G | Node-B, NodeB, Base station | Similar to LTE |
| | | MAC address |
| WiMax (802.16) | RAS (Radio Access Station) | BSID (Base Station ID) |
| | | MAC address of RAS |
| WiBro | | |

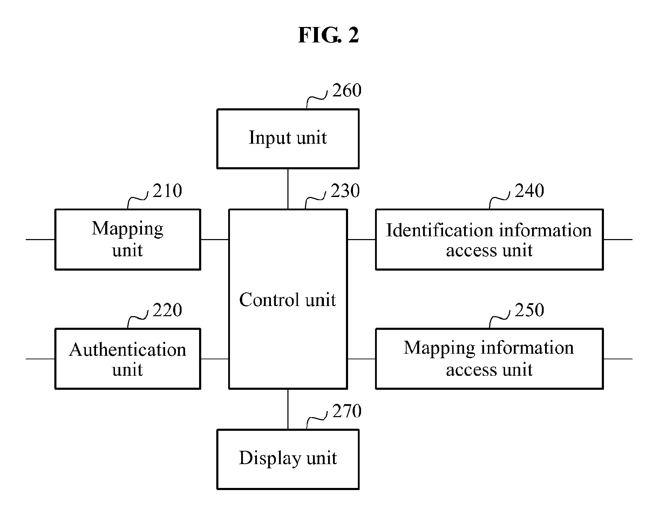

FIG. 2 is a block diagram illustrating an example of a device for accessing information mapped to a space in which the device is currently located, by using a NAD according to an embodiment. The device of FIG. 2 may correspond to the wireless device 110 of FIG. 1A.

The device of FIG. 2 may include a mapping unit 210, an authentication unit 220, a control unit 230, an identification information access unit 240, a mapping information access unit 250, an input unit 260, and a display unit 270.

The mapping unit 210 may map activation information or execution information to one or more specific pieces of Network Access Device Identification Information (NADII) on NADs, so that a specific application service may be activated or executed.

The authentication unit 220 may perform user authentication for an access of a server to execute or provide an application service.

The control unit 230 may mark pieces of NADII on NADs accessible by a wireless device, and may determine whether to access pieces of information mapped to the marked pieces of NADII based on the marked pieces of NADII when the wireless device is beyond a radio coverage of the NADs.

The identification information access unit 240 may access pieces of NADII on one or more NADs found through wireless scanning in a current location of the wireless device, to access information mapped to the space by the wireless device.

The mapping information access unit 250 may access pieces of information mapped to the pieces of NADII for each of the pieces of NADII accessed by the identification information access unit 240.

The mapping information access unit 250 may access pieces of information stored in a server or a database, based on the pieces of NADII. A predetermined physical storage device or a logical storage device may be used to store pieces of information.

The input unit 260 may receive an input of information to be mapped to the space.

The display unit 270 may display, on the wireless display, pieces of information mapped to the space accessed by the mapping information access unit 250.

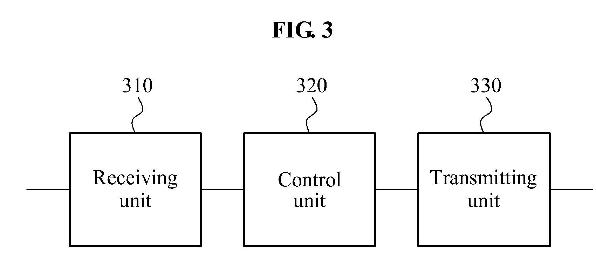

FIG. 3 is a block diagram illustrating another example of a device for accessing information mapped to a space in which the device is currently located, by using a NAD according to an embodiment. The device of FIG. 3 may correspond to the NAD2 120, the NAD3 130, and the NAD4 140 of FIG. 1A.

The device of FIG. 3 may include a receiving unit 310, a control unit 320, and a transmitting unit 330.

The receiving unit 310 may receive, from a wireless device, a request signal for information mapped to a NAD. The information may be mapped to the NAD, based on a part or all of access information and setting information.

The control unit 320 may relay the information mapped to the NAD between a server and the wireless device, based on II. When a request for information is received from the wireless device, when the request is transmitted to a server, and when the information is received from the server, the control unit 320 may transfer the information to the wireless device.

The transmitting unit 330 may transmit access information on the NAD or setting information on the NAD to the wireless device and the server.

The transmitting unit 330 may transfer, to the server, a signal to request the information mapped to the NAD. The transmitting unit 330 may periodically or aperiodically transmit a request for the information mapped to the NAD. Additionally, when a request is received from the wireless device, the transmitting unit 330 may transfer a signal to request the information mapped to the NAD.

The receiving unit 310 may receive the information mapped to the NAD from the server.

The control unit 320 may generate a list of users accessing the NAD during a predetermined period of time. The list may display II on the wireless device.

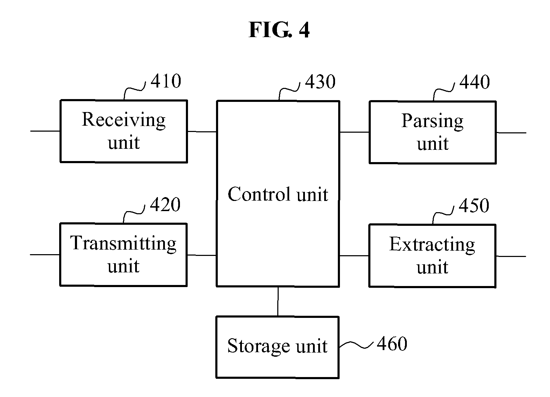

FIG. 4 is a block diagram illustrating still another example of a device for accessing information mapped to a space in which the device is currently located, by using a NAD according to an embodiment. The device of FIG. 4 may correspond to the server 150 of FIG. 1A.

The device of FIG. 4 may include a receiving unit 410, a transmitting unit 420, a control unit 430, a parsing unit 440, an extracting unit 450, and a storage unit 460.

The receiving unit 410 may receive a request signal for information mapped to a NAD. The information may be mapped to the NAD, based on a part or all of NADII on the NAD. For example, the information may be mapped to the NAD, using a key as NADII on the NAD. The mapping of the information to the NAD may indicate mapping the information to the NADII on the NAD.

The receiving unit 410 may receive the NADII on the NAD. The receiving unit 410 may receive predetermined information and the NADII on the NAD from at least one wireless device located in a radio coverage of the NAD.

The predetermined information may include at least one of II, indices indicating a location of information, a tag, an icon, a URL and contents including a character, a number, a symbol, voice, sound, an image, or an arbitrary combination of images.

The contents may include an arbitrary combination of one or more contents with an icon or a tag. A plurality of tags may be provided, and may be associated with information of the contents. A plurality of icons may be provided, and may be associated with attributes and sort of the contents.

Additionally, the II may include at least one of a user identifier, a username, a file identifier, a file name, a protocol identifier, a protocol name, a server identifier, a server name, an application service identifier, an application service name, an application service server identifier (identifier for an application service server), an application service server name, and Internet Protocol (IP) addresses of an application service server.

The application service may include at least one of a web service, a printing service, a file storage service, a file transmission and sharing service, a cloud service, a home networking service, an NFC service, a coupon providing service, a ticket providing service, and a remote access service.

The control unit 430 may search for information mapped to II, based on a preset mapping scheme. Information mapped to a part or all of the II may be set in advance. Accordingly, the control unit 430 may interpret the II based on a preset criterion, and may search for corresponding information.

The transmitting unit 420 may transmit the information found by the control unit 430.

The control unit 430 may sort the found information based on a combination relationship of tags. The control unit 430 may write tags on contents. The information may be sorted, based on a search ranking of written tags, a number of times that associated tags are searched for together, and meaning of tags with a superordinate concept or a subordinate concept.

The control unit 430 may access the information mapped to the II, in response to a request of the wireless device. The accessing may include registering, storing, deleting, reading, writing, correcting and adding of the mapped information, or performing an operation of the mapped information.

The parsing unit 440 may parse a character string satisfying a predetermined criterion among contents of the information, based on a function to which the predetermined criterion is reflected. The predetermined criterion may be set by a user.

When contents of the mapped information are changed by the wireless device, the parsing unit 440 may parse the changed contents by accessing the mapped information.

The extracting unit 450 may extract predetermined information on the parsed portion. The extracted information may include a tag. For example, when information is a text, a tag may be extracted from a title and contents of the text.

The control unit 430 may map extracted information to the NAD. Information and predetermined information extracted through an access may be displayed on the wireless device. The storage unit 460 may store II for each NAD. The storage unit 460 may store information. The storage unit 460 may store information on a mapping relationship between the II and information.

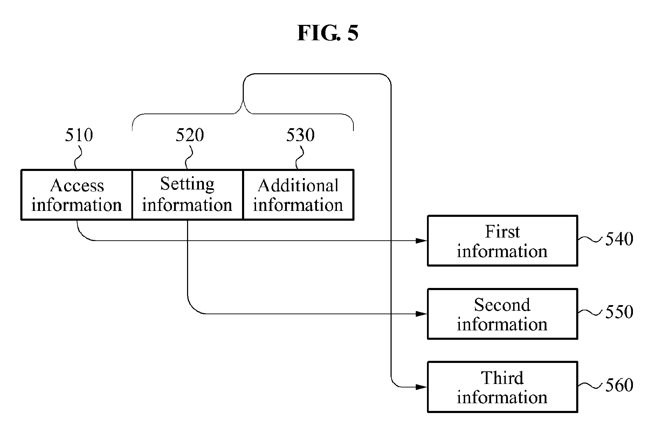

FIG. 5 illustrates a process of mapping information to access information, setting information or additional information on a NAD according to an embodiment.

Referring to FIG. 5, access information 510 may be mapped to first information 540, setting information 520 may be mapped to second information 550. The setting information 520 and additional information 530 may be mapped to third information 560. An example of FIG. 5 is merely an example and accordingly, a part or all of the access information 510, the setting information 520 and the additional information 530 may be mapped to the first information 540, the second information 550, and the third information 560.

The additional information 530 may be arbitrarily added by a user. The additional information 530 may be used to map information to a NAD.

By using the additional information 530, a plurality of pieces of information may be mapped to the NAD. The additional information 530, together with the access information 510 and the setting information 520, may be used for mapping of information.

For example, the plurality of pieces of mapped information may be distinguished from each other by a pair of an identifier of the additional information 530 and an identifier of the access information 510 or the setting information 520. In the information distinguished by the identifier of the additional information 530, an attribute associated with an access of the information may be set. The attribute may be published, for example, to an owner or users of a group.

For example, a wireless device may use a MAC address of a NAD to access information mapped to the NAD. However, to access specific additional information on the NAD, both the MAC address of the NAD and the additional information 530 may be required.

Additionally, when the wireless device accesses information mapped to a NAD, both contents and a list of additional information mapped to the NAD may be viewed. However, when the wireless device accesses the additional information, only contents of the additional information may be viewed.

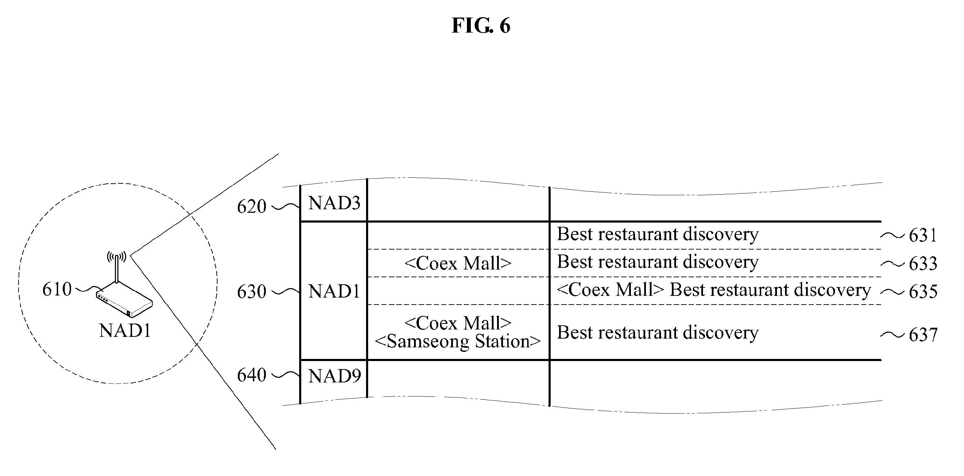

FIG. 6 illustrates an example of information mapped to a NAD according to an embodiment.

Referring to FIG. 6, feed data, for example, posts or comments of a Social Network Service (SNS) or a web message board may be mapped to a NAD1 610.

Information may be mapped for each of a NAD3 620, a NAD1 630, and a NAD9 640. The mapped information may be stored in a server.

When information mapped to the NAD1 610 is a Bulletin Board System (BBS), contents may include a tag. Content 631 that does not include a tag, content 633 including a single tag in a title, content 635 including a tag in contents, content 637 including two tags in a title, and the like may be mapped to NAD1 610.

A tag may be set by a user or a specific communication protocol. A NAD or a server may parse predetermined information from content, and may associate the parsed information with the NAD.

When a user A records content by accessing the BBS mapped to the NAD1 610, and when a NAD or a server parses the recorded content and determines that required information exists, the information may be extracted, and the extracted information may be associated with the NAD1 610.

For example, when the user A records content "Discovery of a best restaurant in Coex Mall at Samseong Station" on the BBS, the NAD1 610 or the server may parse the content, and may associate "Samseong Station" with "Coex Mall" as information on the NAD1 610. The parsing may refer to extracting a term or a sentence determined as a keyword or main information from recorded content, and storing the extracted term or sentence.

When a user B records another content by accessing the BBS mapped to the NAD1 610, and when information extracted by parsing the other content exists, the NAD1 610 or the server may associate the extracted information with the NAD1 610.

The above associated information may be displayed as a result value during a search or a request of a wireless device. For example, when a user C searches for "Samseong Station," the wireless device may detect a "Samseong Station" to display the NAD1 610 that stores "Samseong Station" as information so that the user C may click on the NAD1 610, or to display all information mapped to the NAD1 610 or a user list of the NAD1 610.

Information mapped to the NAD1 610 may include, for example, a text, an advertisement, a ticket, a coupon, or a short sentence on a file or Twitter, and the like. The information may also include a tagged post. A tag may refer to a keyword or an identifier used to search for information.

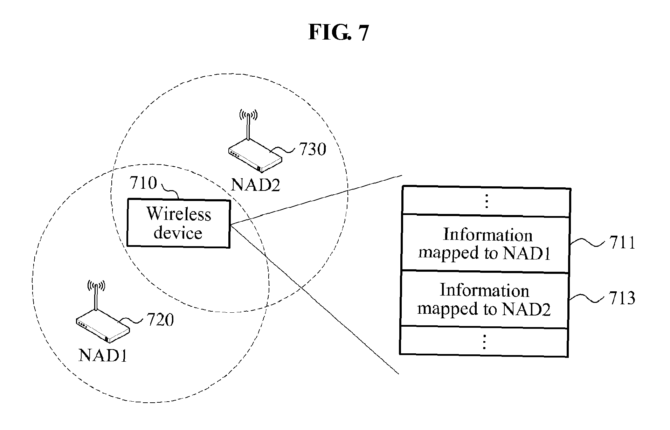

FIG. 7 illustrates information mapped for each of NADs according to an embodiment.

Referring to FIG. 7, when a plurality of wireless networks are found in a wireless device 710, information 711 mapped to a NAD1 720, and information 713 mapped to a NAD2 730 may be displayed on the wireless device 710.

When a user generates new information using the wireless device 170, the generated information may be mapped to only a specific NAD, for example, the NAD1 720, or to all found NADs, for example, the NAD1 720 and the NAD2 730.

Additionally, a tag may be attached to information, and tagging may be performed by the wireless device 710 or a server. In other words, a tag may be attached to information by user's setting in the wireless device 710, or information may be tagged through parsing in the server.

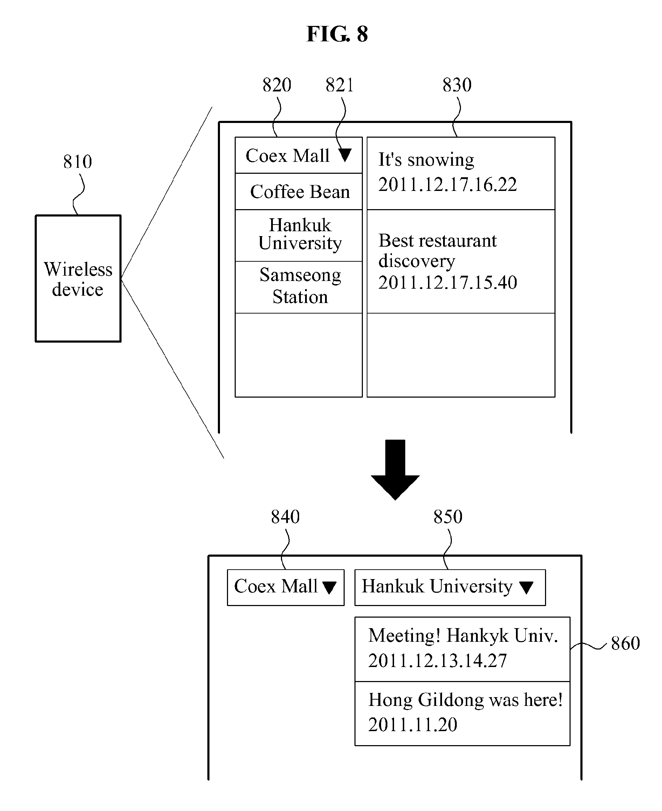

FIG. 8 illustrates information including a tag mapped to a NAD according to an embodiment.

Referring to FIG. 8, based on an information access method according to an embodiment, a wireless device 810 may access pieces of NADII of NADs that are accessible in a current location, may access pieces of information mapped to the pieces of NADII, and may display the pieces of information.

The displayed pieces of information may include or not include a tag. A tag may be included in a title, or content, and may be used for classification, a category, and a keyword. A plurality of tags may be located for each use.

Information displayed on the wireless device 810 may be divided into a tag portion 820 and a content portion 830. An inverted triangle mark 821 may indicate that tags associated with "Coex Mall" exist. The tags may be displayed by clicking on or touching the inverted triangle mark 821. When the inverted triangle mark 821 is clicked on or touched, the tags may be displayed in various forms, for example, a pull-down form, and the like.

Tags or contents may be displayed, for example, in a latest creation order, an order that tags or contents are most frequently searched for, an order of a number of texts with a corresponding tag, and the like.

When a user selects another tag, pieces of information associated with the selected tag may be displayed.

For example, when information tagged with a tag "Coex Mall" 840 is displayed, and when a user desires to search for information associated with "Coex Mall," the user may select "Hankuk University" 850 by clicking on an inverted triangle mark, and information 860 tagged with "Coex Mall" 840 and "Hankuk University" 850 may be displayed on the wireless device 180.

Information may include one or more tags and one or more contents, and a tag may be associated with information on content. Additionally, a tag may include a keyword associated with information on content, and one or more icons matched to the keyword.

Contents including tags may form a "network," that is, a "content network", based on the tags. For example, in content 1 including tags <Seoul><Gangnam Station><Soccer club> and content 2 including tags <Gangnam Station><Busan>, the tag <Gangnam Station> may be included in both the content 1 and content 2 and accordingly, the content 1 and content 2 may be connected via a content network. Additionally, content 3 including tags <Haeundae><Movie><Busan>, and content 2 including tags <Busan><Haeundae><Movie> may be connected to each other via a content network, based on information on the tags, regardless of an order of the tags.

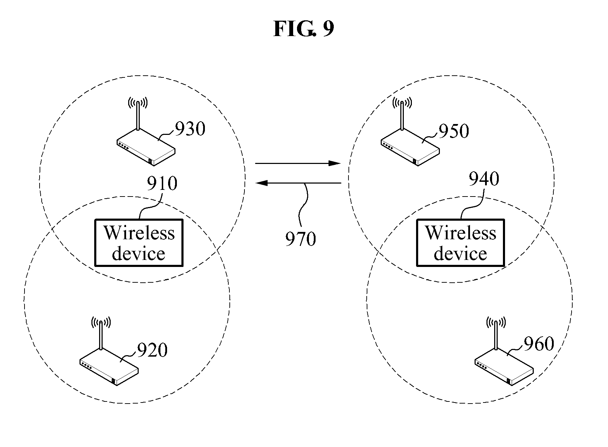

FIG. 9 illustrates a process by which a wireless device accesses information mapped to a space in which the wireless device is currently located, by using a NAD, when a remote access is allowed, according to an embodiment.

Referring to FIG. 9, wireless devices 910 and 940 may extend a region accessible through the remote access.

The wireless device 910 may access NADs 920 and 930. The wireless device 940 may access NADs 950 and 960. When a remote access 970 is allowed between the wireless devices 910 and 940, the wireless devices 910 and 940 may transfer information mapped to accessible NADs, and may access the information.

Each of the wireless devices 910 and 940 may operate as if each of the wireless devices 910 and 940 is within a radio coverage of a NAD to which a counterpart wireless device belongs. Each of the wireless devices 910 and 940 may perform surfing of contents, chatting, and the like, based on information accessible by a counterpart wireless device.

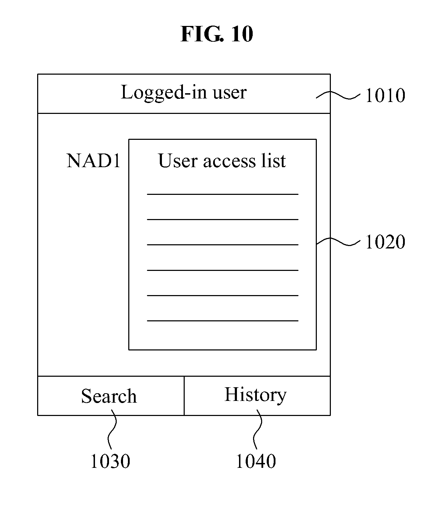

FIG. 10 illustrates an example of an application of a method of accessing information mapped to a space in which a wireless device is currently located, by using a NAD, in the wireless device according to an embodiment.

Referring to FIG. 10, the wireless device may display a user access list 1020 of users accessing a NAD1.

When the wireless device accesses the NAD1, II on the wireless device may be transmitted to the NAD1, and transmitted to a server through the NAD1. The server may store the II and may generate the user access list 1020, or the NAD1 may store the II and may generate the user access list 1020. When the wireless device sends, to the NAD1, a request for the user access list 1020, the user access list 1020 may be transmitted to the wireless device from the server or the NAD1.

The wireless device may include an indicator 1010 to indicate that a user of the wireless device has logged on. A user access list of users accessing the NAD1 may be displayed.

The user access list may refer to a list of users who have accessed or are currently accessing the NAD1, and may show users accessed the NAD1 during a period from a current point in time to a predetermined point in time in the past.

When a user A selects "Search" 1030 on the wireless device, NADs accessible by the wireless device may be displayed. By the selection of the user A, a user list of users accessing a specific NAD, or a user access list for all accessible NADs may be displayed on the wireless device.

When the user A selects "History" 1040 on the wireless device, an access list of users that accessed a specific NAD or all NADs may be displayed.

When NADII on a NAD accessible by a wireless device of the user A is identical to NADII of a NAD accessible by a wireless device of a user B, the users A and B may identify with each other based on user access lists, may verify information on a counterpart, and may chat with each other using a common NAD.

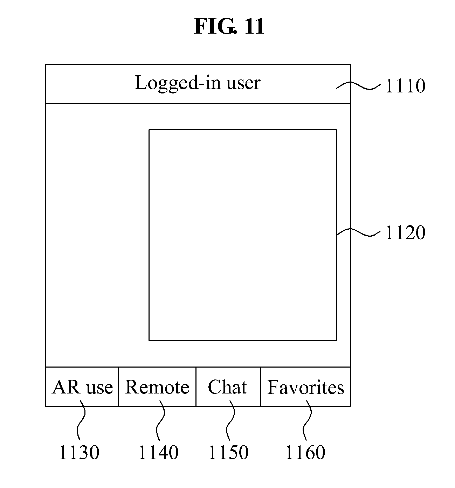

FIG. 11 illustrates another example of an application of a method of accessing information mapped to a space in which a wireless device is currently located, by using a NAD, in the wireless device according to an embodiment.

Referring to FIG. 11, the wireless device may include an indicator 1110 to indicate that a user of the wireless device has logged on.

Also, the wireless device may include a display unit 1120 to display a screen to which a function corresponding to a selection of "AR use" 1130, "Remote" 1140, "Chat" 1150, and "Favorites" 1160 is reflected.

When NADs are located in an object to be captured by the wireless device, using an Augmented Reality (AR) program, the "AR use" 1130 may allow the NADs to be displayed on the wireless device based on physical location information on the NADs, and may allow pieces of information mapped to the NADs to be displayed.

For example, when an object to be captured is viewed by a camera using an AR program, a variety of information mapped to a NAD associated with the object may be displayed on the wireless device.

In this example, NADs in the object may be identified based on physical location information on the NADs, and pieces of information mapped to the NADs may be displayed. Accordingly, the same effect as if a user is in a location enabling an access to each of the NADs may be obtained.

The "Remote" 1140 may correspond to a function of accessing information mapped to NADs accessible by another wireless device when a remote access with the other wireless device is permitted.

The "Chat" 1150 may correspond to a function of performing a one-to-one chat between users sharing the same NAD or a chat between users. For example, a user with an access to a NAD may create a room in the NAD, and may bind an identifier tag of the room to the NAD. The other users may identify the room based on the identifier tag, and may enter the room. The users may chat with each other in the room opened in the NAD.

The "Favorites" 1160 may correspond to a function of searching for information associated with desired contents, or accessing pieces of information mapped to a desired NAD using a location mark and a content mark. A location may correspond to NADII on a NAD. When NADII on NADs that are currently accessible is marked using the "Favorites" 1160, location information associated with the NADII may be stored in the wireless device. The stored location information and the marked NADII may be used to access information mapped to the NADs even when the wireless device is beyond a radio coverage of the NADs.

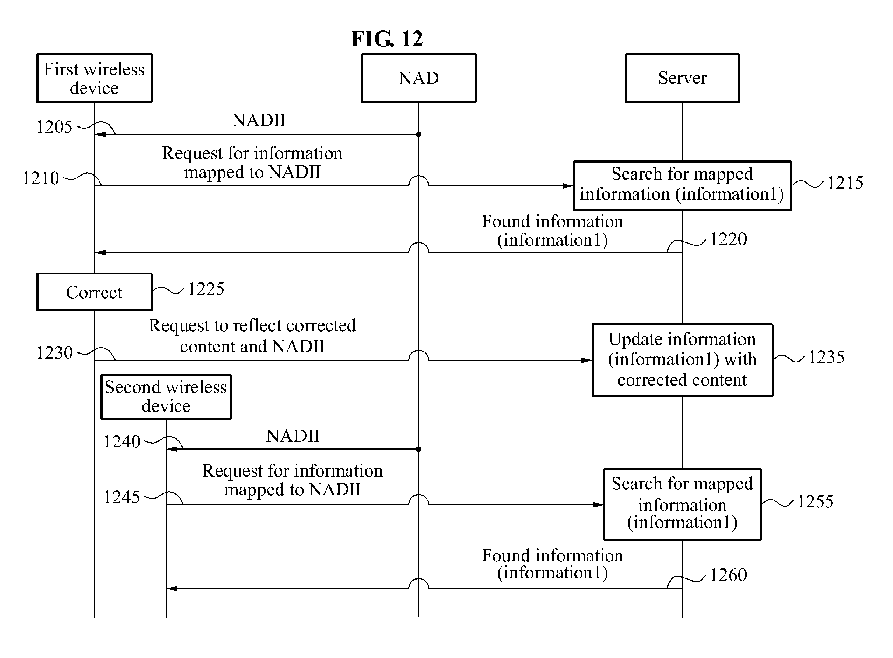

FIG. 12 is a flowchart illustrating a method by which two different wireless devices, that is, a first wireless device and a second wireless device access information mapped to a space in which the first wireless device and the second wireless device are currently located, by using a NAD according to an embodiment.

Referring to FIG. 12, in operation 1205, the first wireless device may search for a NAD through wireless scanning in a current location of the first wireless device, and may access NADII on the NAD. The wireless devices may verify the NADII through active scanning. The NADII may be set in manufacturing of the NAD, or may be set in a communication protocol based on a situation of a server and a communication network. Setting information may be set in advance, and may be changed by a user of the NAD.

In operation 1210, the first wireless device may transmit, to the server, a request for information mapped to the NADII, based on the NADII accessed in operation 1205.

In operation 1215, the server may receive the request, and may search for the mapped information, based on the NADII. The server may be assumed to recognize, in advance, information on a mapping criterion and a mapping scheme between the information and a part or all of the NADII.

In operation 1220, the server may transmit the mapped information, that is, information 1 to the first wireless device.

In operation 1225, the first wireless device may correct the information 1. Additionally, the first wireless device may generate new information and may perform mapping.

In operation 1230, the first wireless device may transmit, to the server, the NADII, corrected content of the information 1, and a request to reflect the corrected content, so that the corrected content may be reflected on the server.

In operation 1235, the server may update the original information 1 with the corrected content.

In operation 1240, the second wireless device may search for the NAD through wireless scanning in a current location of the second wireless device, and may access the NADII on the NAD.

In operation 1245, the second wireless device may transmit, to the server, a request for information mapped to the NADII, based on the NADII accessed in operation 1240.

In operation 1255, the server may receive the request, and may search for the mapped information, based on the NADII. The server may be assumed to recognize, in advance, information on a mapping criterion and a mapping scheme between the information and a part or all of the NADII.

In operation 1260, the server may transmit the mapped information, that is, information 1 to the second wireless device.

In operation 1260, the second wireless device may complete an access to the mapped information. In other words, the second wireless device may receive the accessed information 1.

Operations 1205 through 1230, or operations 1240 through 1260 may be performed in all wireless devices capable of detecting a NAD. For example, when a NAD exists in a space in which an arbitrary wireless device is currently located, the arbitrary wireless device may access NADII on the NAD, and may map information based on the NADII, or may access the mapped information.

Operations 1210, 1220, 1230, 1245, and 1260 irrelevant to the NAD may indicate that the NAD is not currently used as a device for a communication between the first wireless device and the second wireless device in the space in which the first wireless device and the second wireless device are currently located. For example, when the NAD is used for the communication, a part or all of operations 1210, 1220, 1230, 1245, and 1260 may be performed through the NAD, that is, the NAD may be used as an access device for the communication.

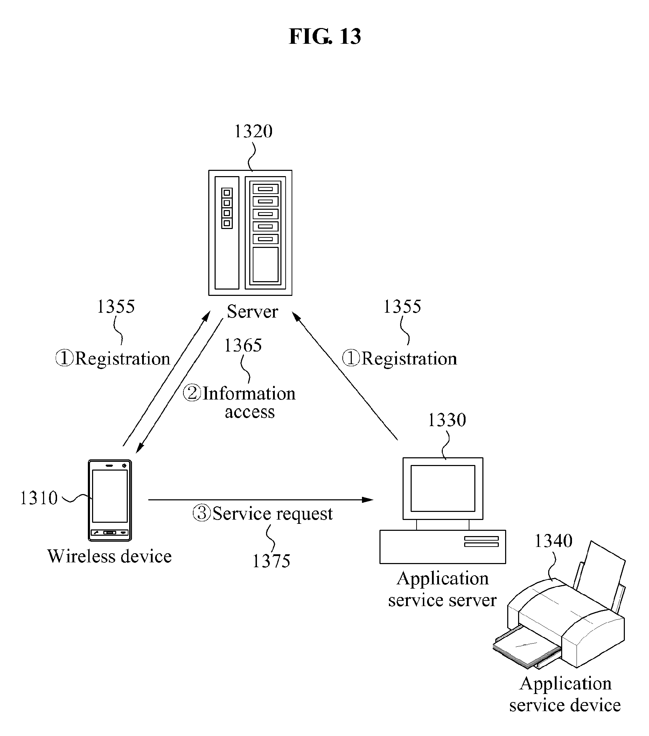

FIG. 13 illustrates an example of a method of accessing an application service mapped to a space in which a wireless device is currently located, by using a NAD in the wireless device according to an embodiment.

A wireless device 1310 may execute an application service available in a current location of the wireless device 1310. Various services available in the current location may include, for example, a printer service, a web service, a home networking service, and the like. The application service may include components to use a service, for example, the wireless device 1310 to use the application service, a server 1320 or a database to map and store information, that is, the application service, and an application service server 1330 to process the application service. Through a mutual operation between the above components, the wireless device may use a specific application service. To use an application service, the application service may need to be registered and used.

To use a specific application service available in the current location, the specific application service may need to be registered in the current location. Registration of the application service may be similar to mapping of information. Operation 1355 may be registration of the application service in the current location. In operation 1355, the wireless device 1310, a computer, or the application service server 1330 may register information on the application service in the server 1320 or the database. To register the information, the information on the application service may be mapped to NADII on a NAD located in the space. The information on the application service may be, for example, an identifier of the application service, or an identifier of the application service server 1330 to provide the application service.

To use a registered service, the wireless device 1310 may need to access information mapped to NADII on a specific NAD or a specific space. In operation 1365, the wireless device 1310 may access information regarding whether a specific application service is mapped to the space. In operation 1375, the wireless device 1310 may be connected to a specific application service server, based on the accessed information, to use the specific application service. Additionally, the wireless device 1310 may use the specific application service, based on a specific protocol or a preset protocol. In other words, the wireless device 1310 may request a service by exchanging required commands or parameters with the application service server 1330 through an access to the application service server 1330, and the application service server 1330 may execute the service. An authentication operation may be added for each of the above operations, if necessary.

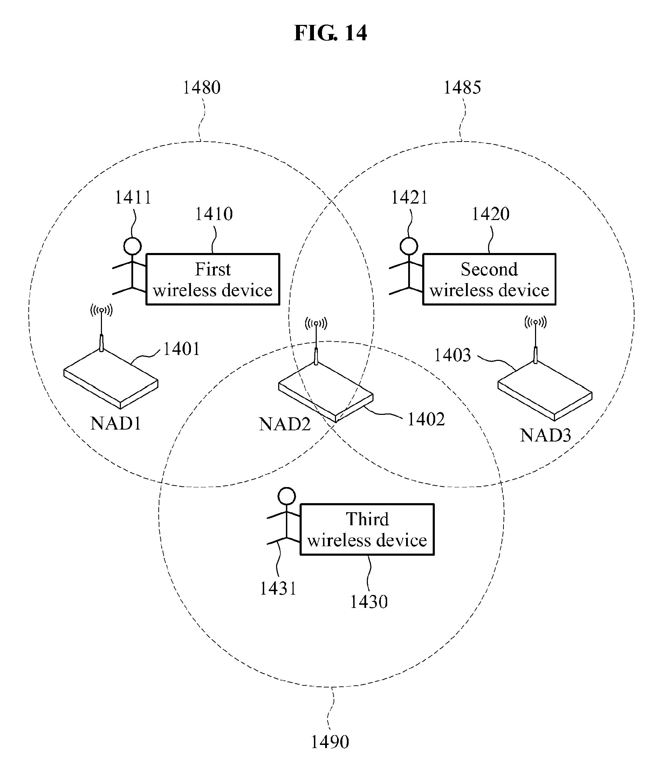

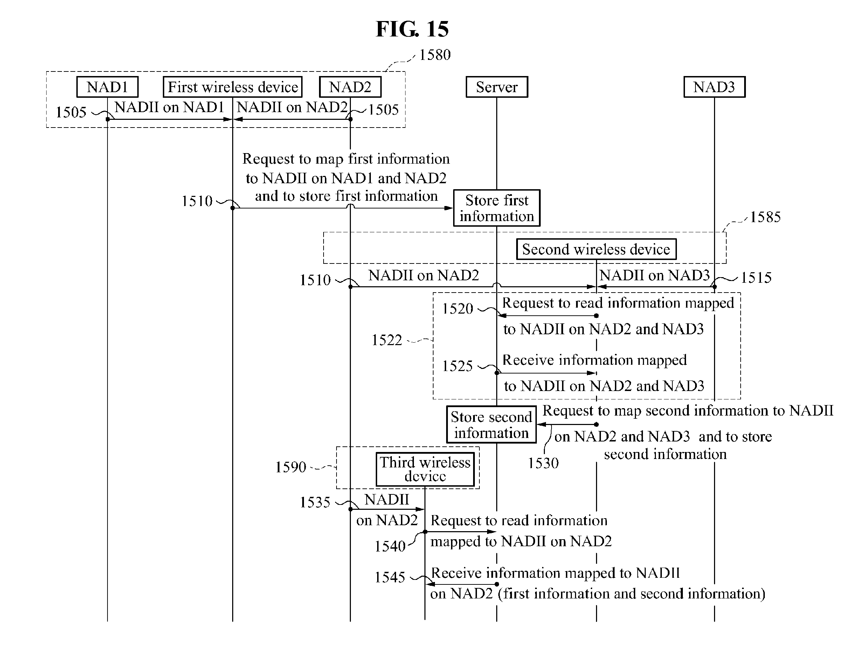

FIG. 14 illustrates an arrangement of three wireless devices, that is, a first wireless device 1410, a second wireless device 1420, and a third wireless device 1430, and three NADs according to an embodiment. FIG. 15 is a flowchart illustrating a method of mapping arbitrary information to a space in which each of the wireless devices are currently located, or of accessing mapped information, by using the NADs in the wireless devices according to an embodiment.

For further understanding, the following description is provided with reference to FIG. 14 together with FIG. 15. Referring to FIG. 14, the first wireless device 1410, the second wireless device 1420, and the third wireless device 1430 may be used by a first wireless device user 1411, a second wireless device user 1421, and a third wireless device user 1431, respectively. The three NADs, that is, a NAD1 1401, a NAD2 1402, and a NAD3 1403 may be located near the wireless devices. The first wireless device 1410 may find the NAD1 1401 and NAD2 1402 through wireless scanning in a current location of the first wireless device 1410. The second wireless device 1420 may find the NAD2 1402 and NAD3 1403 through wireless scanning in a current location of the second wireless device 1420. Additionally, the third wireless device 1430 may find the NAD2 1403 through wireless scanning in a current location of the third wireless device 1430.

In FIG. 14, a wireless scanning coverage 1480 of the first wireless device 1410 may indicate that the first wireless device 1410 may find the NAD1 1401 and NAD2 1402 through wireless scanning in the current location. Similarly, a wireless scanning coverage 1485 of the second wireless device 1420 may indicate that the second wireless device 1420 may find the NAD2 1402 and NAD3 1403 through wireless scanning in the current location. Additionally, a wireless scanning coverage 1490 of the third wireless device 1430 may indicate that the third wireless device 1430 may find the NAD2 1402 through wireless scanning in the current location. As described above, a wireless scanning coverage of an arbitrary wireless device may refer to a space in which the arbitrary wireless device finds a NAD through wireless scanning in a current location of the arbitrary wireless device, or finding a NAD through wireless scanning in the current location. In the example of FIG. 14, the wireless scanning coverage may refer to a space for finding a NAD through wireless scanning, and accordingly corresponding NADs may be found.

The wireless scanning coverage 1480 of FIG. 14 may be identical to a wireless scanning coverage 1580 of FIG. 15. Similarly, the wireless scanning coverages 1485 and 1490 of FIG. 14 may be identical to wireless scanning coverages 1585 and 1590 of FIG. 15, respectively.

The method of mapping arbitrary information to the space or accessing mapped information in the arrangement will be described with reference to FIG. 15.

When information to be mapped to a current location at an arbitrary point in time, for example a first point in time, by an arbitrary wireless device, for example a first wireless device, exists, a method of mapping the information is described below.

In operation 1505, the first wireless device may access pieces of NADII on the NAD1 1401 and NAD2 1402 found through wireless scanning in a current location of the first wireless device at the first point in time.

In operation 1510, the first wireless device may transmit, to the server, a storage request to map first information to the pieces of NADII on the NAD1 1401 and NAD2 1402 and to store the first information. In response to the storage request, the server may map and store the first information.

In an example, a second wireless device may desire to read information mapped to a space in which the second wireless device is currently located at a second point in time after the first point in time.

In operation 1515, the second wireless device may access pieces of NADII on the NAD2 1402 and the NAD3 1403 found through wireless scanning in a current location of the second wireless device at the second point in time.

In operation 1520, the second wireless device may transmit a read request to the server, to access information mapped to the pieces of NADII on the NAD2 1402 and the NAD3 1403.

In operation 1525, the server may transmit pieces of information mapped to the pieces of NADII on the NAD2 1402 and the NAD3 1403 to the second wireless device, in response to the read request. Accordingly, the second wireless device may receive the mapped pieces of information.

In this example, when the first information is not deleted or corrected during a period from the first point in time to the second point in time, the pieces of information received by the second wireless device may include the first information mapped by the first wireless device at the first point in time. In other words, the first information may be mapped to the pieces of NADII on the NAD1 1401 and the NAD2 1402 at the first point in time and may be stored, and the information mapped in the current location of the second wireless device may be pieces of information mapped to the pieces of NADII on the NAD2 1402 and the NAD3 1403. Accordingly, the NADII on the NAD2 1402 may be common information among pieces of II representing a space in which the two devices are located. When information mapped to the NADII on the NAD2 1402 is not deleted or corrected during a period from a point in time for the mapping to the second point in time, the information mapped to the NADII on the NAD2 1402 may be included in the pieces of information received by the second wireless device. The above process and result may be one of key features of the present invention.

In another example, the second wireless device may desire to map second information to the space in which the second wireless device is currently located at the second point in time after the first point in time.

In this example, for convenience of description, operation 1522 including operations 1520 and 1525 may be assumed to be omitted.

In operation 1515, the second wireless device may access pieces of NADII on the NAD2 1402 and the NAD3 1403 found through wireless scanning in the current location of the second wireless device at the second point in time after the first point in time.

In operation 1530, the second wireless device may transmit, to the server, a storage request to map the second information to the pieces of NADII on the NAD2 1402 and the NAD3 1403 and to store the second information. In response to the storage request, the server may map and store the second information.

In still another example, a third wireless device may desire to read information mapped to a space in which the third wireless device is currently located at a third point in time after the second point in time.

In operation 1535, the third wireless device may access NADII on the NAD2 1402 found through wireless scanning in a current location of the third wireless device at the third point in time.

In operation 1540, the third wireless device may transmit a read request to the server, to access information mapped to the NADII on the NAD2 1402.

In operation 1545, the server may transmit information mapped to the NADII on the NAD2 1402 to the third wireless device, in response to the read request. Accordingly, the third wireless device may receive the information mapped to the NADII on the NAD2 1402. In this example, when the first information is not deleted or corrected during a period from the first point in time to the third point in time, the pieces of information received by the third wireless device may include the first information mapped by the first wireless device at the first point in time.

Additionally, when the second information is not deleted or corrected during a period from the second point in time to the third point in time, the pieces of information received by the third wireless device may include the second information mapped by the second wireless device at the second point in time.

In other words, the first information may be mapped to the pieces of NADII on the NAD1 1401 and the NAD2 1402 at the first point in time and may be stored, and the second information may be mapped to the pieces of NADII on the NAD2 1402 and the NAD3 1403 at the second point in time and may be stored. Additionally, information mapped in the current location of the third wireless device may be information mapped to the NADII on the NAD2 1402. Accordingly, the NADII on the NAD2 1402 may be common information among pieces of II representing a space in which the first wireless device through the third wireless device are located. When pieces of information mapped to the NADII on the NAD2 1402, that is, the first information and the second information are not deleted or corrected during a period from a point in time for the mapping to the third point in time, the first information and the second information may be included in pieces of information received by the third wireless device. The above process and result may be one of key features of the present invention.

For example, when arbitrary information is mapped or mapped information is accessed, whether to map only a specific piece of NADII on NADs found through wireless scanning may be determined depending on circumstances.

In an example, in operations 1505 and 1510, the first wireless device may find two NADs, that is, the NAD1 1401 and the NAD2 1402 through scanning, however, the first wireless device may map the first information to the NADII on the NAD1 1401, not to the NADII on the NAD2 1402. In this example, after the first point in time, the pieces of information received in operation 1525 in which the second wireless device performs a read operation or in operation 1545 in which the third wireless device performs a read operation may not include the first information.

In another example, whether mapping is performed may be determined, based on a type of devices among pieces of NADII on NADs found through scanning, or based on pieces of II.

Additionally, a part of arbitrary information may be mapped, or a part of mapped information may be accessed. For example, in operation 1510 of mapping the first information, the server may map and store a part of the first information for any reason, in response to the storage request. In this example, information to be mapped and stored may include a mass text or a large image file. When a wireless device transmits a storage request, a part of information to be stored may be requested to be stored based on a mapping policy or necessity.

Similarly, when mapped information is requested, for example, when the pieces of mapped information are requested and received in operation 1525 or 1545, and when the server does not transmit all of the pieces of mapped information, that is, when a large number of pieces of information is cumulatively mapped and stored or when a single large piece of information (for example, a mass text or a large image) is stored, information may be divided and a part of the information may be transmitted.

In addition, the wireless device may send a request for a part of the mapped information. An access control may be applied to the request, that is, partial mapping may be enabled based on an access policy for example a security level or a user authority of the wireless device. Furthermore, full mapping or partial mapping may be selectively implemented depending on a purpose or a necessity.

Mapped information may be an application service. For example, referring to FIGS. 13 and 15, the pieces of information received in operation 1525 or 1545 of FIG. 15 may include a printing service as an application service. In this example, the printing service may be executed in a space in which an arbitrary wireless device is located, by executing a corresponding application.

In operation 1525 of FIG. 15, a second wireless device user using the second wireless device may perform printing using an available printer based on the printing service in the current location.

The mapped information may be a coupon service, or a ticket service. The application service may be mapped to only specific pieces of II, and may be activated by only specific users. Accordingly, a method of mapping arbitrary information or services to an arbitrary space and of providing a variety of information or services to arbitrary users using an arbitrary wireless device in a corresponding location may be provided.

Arbitrary users using the wireless devices may continue to stay at the same location, or may move, while carrying the wireless devices. Accordingly, the users may perform operations of accessing pieces of information mapped to a space in which each of the users stays or a space to which the users move, or of mapping pieces of information to the spaces, using the wireless devices whenever necessary. Accordingly, it is obvious that it is possible to map pieces of information to an arbitrary space or to access pieces of mapped information in the space.

Pieces of information representing a space, and pieces of information mapped to a corresponding space may need to be efficiently managed. For example, when a NAD corresponding to new II is newly installed in a space that does not have II representing the space, or when an existing NAD corresponding to II representing a space is eliminated or relocated, pieces of related information may need to be appropriately updated, deleted, or corrected. In other words, when a NAD is newly installed, information may be mapped to a space in which the NAD is installed. Conversely, when an existing NAD is eliminated or relocated, and when pieces of related mapping information are not appropriately deleted or corrected, pieces of incorrect information may be mapped to the space. Accordingly, the pieces of incorrect mapped information may be accessed and thus, utility of information may be reduced or may disappear.

The above-described embodiments of the present invention may be recorded in non-transitory computer-readable media including program instructions to implement various operations embodied by a computer. The media may also include, alone or in combination with the program instructions, data files, data structures, and the like. The program instructions recorded on the media may be those specially designed and constructed for the purposes of the embodiments, or they may be of the kind well-known and available to those having skill in the computer software arts.

Although a few embodiments of the present invention have been shown and described, the present invention is not limited to the described embodiments. Instead, it would be appreciated by those skilled in the art that changes may be made to these embodiments without departing from the principles and spirit of the invention, the scope of which is defined by the claims and their equivalents.

## Claims

1. A method of accessing information mapped to a space in which a wireless device is currently located, by the wireless device using a Network Access Device (NAD) in the wireless device, the method comprising:
accessing pieces of Network Access Device Identification Information (NADII) of one or more NADs among NADs found through wireless scanning by the wireless device at a current location of the wireless device, to access information mapped to the space; and
accessing pieces of information mapped to the pieces of NADII for each of the accessed pieces of NADII.

2. The method of claim 1, further comprising:
mapping information to the space based on the accessed pieces of NADII.

3. The method of claim 1, wherein the accessing of the pieces of information mapped to the pieces of NADII comprises reading pieces of information stored in a server based on the pieces of NADII.

4. The method of claim 1, wherein the accessing of the pieces of information mapped to the pieces of NADII comprises reading pieces of information stored in a database based on the pieces of NADII.

5. The method of claim 4, wherein the reading of the pieces of information stored in the database based on the pieces of NADII comprises using the pieces of NADII to acquire a key value or a part of the key value, the key value being used to access the pieces of information stored in the database.

6. The method of claim 1, wherein the accessing of the pieces of information mapped to the pieces of NADII comprises:
transmitting, to a server, a read request to access the pieces of information mapped to the pieces of NADII and stored; and
receiving, from the server, the pieces of information mapped to the pieces of NADII and stored, in response to the read request.

7. The method of claim 6, wherein the read request comprises one or more pieces of NADII among the accessed pieces of NADII.

8. The method of claim 2, wherein the mapping of the information to the space based on the accessed pieces of NADII comprises transmitting, to a server, a storage request to map the information to the pieces of NADII and store the mapped information, the storage request comprising the information to be mapped.

9. The method of claim 8, wherein the storage request comprises one or more pieces of NADII among the accessed pieces of NADII.

10. The method of claim 1, further comprising:
displaying the accessed pieces of information on the wireless device.

11. The method of claim 10, wherein the displaying of the accessed pieces of information comprises displaying the accessed pieces of information in a preset order.

12. The method of claim 11, wherein the displaying of the accessed pieces of information in the preset order comprises displaying the accessed pieces of information, based on the pieces of NADII to which the pieces of information are mapped and a type of the pieces of information, or in an order of time in which the pieces of information are mapped or in a reverse order to the order of the time.

13. The method of claim 2, further comprising:
receiving an input of information to be mapped to the space so that the wireless device maps the information to the space.

14. The method of claim 1, wherein the accessing of the pieces of NADII comprises accessing pieces of NADII on one or more NADs among NADs found through wireless scanning in a series of locations of the wireless device during a period from a first point in time to a second point in time.

15. The method of claim 1, wherein the accessing of the pieces of NADII comprises:
marking one or more specific pieces of NADII on NADs found through wireless scanning at a first point in time; and
accessing the marked pieces of NADII at a second point in time after the first point in time.

16. The method of claim 1, wherein the accessing of the pieces of NADII comprises:
marking one or more specific pieces of NADII on NADs found through wireless scanning during a period from a first point in time to a second point in time; and
accessing the marked pieces of NADII at an arbitrary point in time after the second point in time.

17. The method of claim 1, wherein mapping of information to the space comprises mapping, by arbitrary wireless devices located in an arbitrary space, arbitrary information to one or more specific pieces of NADII on NADs located in the space.

18. The method of claim 1, wherein when at least two different wireless devices perform a read operation on pieces of information mapped to the same NADII at the same point in time, the pieces of information obtained by the read operation are identical to each other, in the pieces of information mapped to the space.

19. The method of claim 1, wherein in the information mapped to the space,
when a first wireless device maps first information to a space in which the first wireless device is located, at a first point in time,
when each of one or more different wireless devices accesses the mapped pieces of information in a location of the first wireless device at the first point in time, at an arbitrary point in time after the first point in time,
when the first information is mapped at an arbitrary point in time after the first point in time in the same space environment, that is, when the space remains unchanged after the first point in time, that is, when NADs in the space, an arrangement, configurations and settings of the NADs, and pieces of NADII on the NADs remain unchanged, and
when the same mapping is performed at an arbitrary point in time after the first point in time, that is, when the same result is obtained by mapping the first information to pieces of Identification Information (II) representing the space, that is, when the mapping is not modified or removed and the first information and the pieces of II used in the mapping are not corrected or deleted after the first point in time,
each of the pieces of information accessed by the different wireless devices comprises the first information or a portion of the first information.

20. The method of claim 1, further comprising:
marking one or more specific pieces of NADII on NADs accessible by the wireless device; and
accessing pieces of information mapped to the marked pieces of NADII, based on the marked pieces of NADII, when the wireless device is beyond a radio coverage of the NADs.

21. The method of claim 1, wherein in the information mapped to the space,
when a first wireless device accesses pieces of first NADII on one or more NADs among NADs found through wireless scanning in a current location of the first wireless device, to map information to a space in which the first wireless device is currently located at a first point in time, and maps first information to the accessed pieces of first NADII,
when a second wireless device accesses pieces of second NADII on one or more NADs among NADs found through wireless scanning in a current location of the second wireless device, to access information mapped to a space in which the second wireless device is currently located at a second point in time after the first point in time, and accesses pieces of information mapped to the accessed pieces of second NADII,
when a space environment in which the first information is mapped remains unchanged at an arbitrary point in time between the first point in time and the second point in time, that is, when NADs in a space in which the first information is mapped, an arrangement, configurations and settings of the NADs, and pieces of NADII on the NADs remain unchanged,
when the same result is obtained by mapping the first information to the pieces of first NADII at an arbitrary point in time between the first point in time and the second point in time, that is, when the mapping is not modified or removed and the first information and the pieces of first NADII used in the mapping are not corrected or deleted, and
when at least one piece of NADII is included in common in both the pieces of first NADII and second NADII,
the pieces of information mapped to the pieces of second NADII accessed by the second wireless device comprise the first information or a portion of the first information.

22. The method of claim 1, wherein in the information mapped to the space,
when a first wireless device accesses pieces of first NADII on one or more NADs among NADs found through wireless scanning in a current location of the first wireless device, to map information to a space in which the first wireless device is currently located at a first point in time, and maps first information to the accessed pieces of first NADII,
when a 2a-th wireless device accesses pieces of 2a-th NADII on one or more NADs among NADs found through wireless scanning in a current location of the 2a-th wireless device, to map information to a space in which the 2a-th wireless device is currently located at a 2a-th point in time after the first point in time, and maps pieces of 2a-th information mapped to the accessed pieces of 2a-th NADII,
when a third wireless device accesses pieces of third NADII on one or more NADs among NADs found through wireless scanning in a current location of the third wireless device, to access information mapped to a space in which the third wireless device is currently located at a third point in time after the 2a-th point in time, and accesses pieces of information mapped to the accessed pieces of third NADII,
when a space environment in which the first information is mapped remains unchanged at an arbitrary point in time between the first point in time and the third point in time, that is, when NADs in a space in which the first information is mapped, an arrangement, configurations and settings of the NADs, and pieces of NADII on the NADs remain unchanged,
when the same result is obtained by mapping the first information to the pieces of first NADII at an arbitrary point in time between the first point in time and the third point in time, that is, when the mapping is not modified or removed and the first information and the pieces of first NADII used in the mapping are not corrected or deleted,
when a space environment in which the 2a-th information is mapped remains unchanged at an arbitrary point in time between the 2a-th point in time and the third point in time, that is, when NADs in a space in which the 2a-th information is mapped, an arrangement, configurations and settings of the NADs, and pieces of NADII on the NADs remain unchanged,
when the same result is obtained by mapping the 2a-th information to the pieces of 2a-th NADII at an arbitrary point in time between the 2a-th point in time and the third point in time, that is, when the mapping is not modified or removed and the 2a-th information and the pieces of 2a-th NADII used in the mapping are not corrected or deleted,
when at least one piece of NADII is included in common in both the pieces of first NADII and third NADII, the pieces of information mapped to the pieces of third NADII accessed by the third wireless device comprise the first information or a portion of the first information, and
when at least one piece of NADII is included in common in both the piece of 2a-th NADII and third NADII, the pieces of information mapped to the pieces of third NADII accessed by the third wireless device comprise the 2a-th information or a portion of the 2a-th information.

23. The method of claim 1, wherein the NADs are accessed to allow the wireless device to access a communication network, and perform a function specified in a specific communication protocol or a function required to access the communication network.

24. The method of claim 1, wherein NADII on a NAD comprises an identifier of the NAD or a part of the identifier.

25. The method of claim 1, wherein NADII on a NAD comprises a name or an address of a protocol used by the NAD.

26. The method of claim 1, wherein NADII on a NAD comprises coordinate information of a Global Positioning System (GPS) of the NAD.

27. The method of claim 1, wherein NADII on a NAD comprises access information or setting information on the NAD that are used to access a communication network,
wherein the access information comprises a value used to operate or use a specific communication protocol in the NAD, and is mandatory information or optional information required or specified in the specific communication protocol, and
wherein the setting information comprises settable information among the mandatory information or the optional information.

28. The method of claim 1, wherein NADII on a NAD comprises at least one of a network identifier, a service identifier, a Service Set IDentifier (SSID), an Internet Protocol (IP) version 4 (IPv4) address, an IP version 6 (IPv6) address and a Medium Access Control (MAC) address.

29. The method of claim 1, wherein NADII on a NAD comprises at least one of a Basic Service Set IDentifier (BSSID), a MAC address, and an SSID of an Access Point (AP) of a Wireless Fidelity (Wi-Fi) or a Wireless Local Area Network (WLAN).

30. The method of claim 1, wherein the mapped information comprises a character, a number, a symbol, voice, sound, an image, or an arbitrary combination of images.

31. The method of claim 1, wherein the mapped information comprises a tag, an icon, a Universal Resource Locator (URL) and contents comprising a character, a number, a symbol, voice, sound, an image, or an arbitrary combination of images, comprises an index indicating a location of the information, or a portion of the contents, the tag, the icon, the URL, and the index.

32. The method of claim 1, wherein the mapped information comprises II or a part of the II, and
wherein the II comprises at least one of a user identifier, a username, a file identifier, a file name, a protocol identifier, a protocol name, a server identifier, a server name, an application service identifier, an application service name, an application service server identifier (identifier for an application service server), an application service server name (service name for application service), and IP addresses of an application service server.

33. The method of claim 32, wherein an application service comprises a web service, a printing service, a file storage service, a file transmission and sharing service, a cloud service, a home networking service, a Near Field Communication (NFC) service, a coupon providing service, a ticket providing service, or a remote access service.

34. The method of claim 1, further comprising:
transmitting, to an application service server, a request to execute an application service available in the space.

35. The method of claim 1, further comprising:
displaying, on the wireless device, one or more application services available in the space.

36. The method of claim 35, further comprising:
executing a specific application service selected from among the available application services.

37. The method of claim 35, further comprising:
transferring a command or a parameter preset to execute the application service to the application service server.

38. The method of claim 35, further comprising:
performing user authentication for an access of a server to execute or provide the application service.

39. The method of claim 1, further comprising:
mapping activation information or execution information to one or more specific pieces of NADII so that a specific application service is activated or executed.

40. A device for accessing information mapped to a space in which a wireless device is currently located, by using a Network Access Device (NAD), the device comprising:
an identification information access unit to access pieces of Network Access Device Identification Information (NADII) on one or more NADs among NADs found through wireless scanning by the wireless device at a current location of the wireless device to access information mapped to the space; and
a mapping information access unit to access pieces of information mapped to the pieces of NADII for each of the accessed pieces of NADII.

41. The device of claim 40, wherein the mapping information access unit accesses pieces of information stored in a server, based on the pieces of NADII.

42. The device of claim 40, further comprising:
an input unit to receive an input of information to be mapped to the space.

43. The device of claim 40, further comprising:
a display unit to display the accessed pieces of information on the wireless device.

44. The device of claim 40, further comprising:
an authentication unit to perform user authentication for an access of a server to execute or provide an application service.

45. The device of claim 40, further comprising:
a mapping unit to map activation information or execution information to one or more specific pieces of NADII so that a specific application service is activated or executed.

46. The device of claim 40, further comprising:
a control unit to mark pieces of NADII on NADs accessible by the wireless device, and to determine whether to access pieces of information mapped to the marked pieces of NADII based on the marked pieces of NADII, when the wireless device is beyond a radio coverage of the NADs.

47. A method of accessing information mapped to a space in which a wireless device is currently located, by using a Network Access Device (NAD), the method comprising:
mapping predetermined information and Network Access Device Identification Information (NADII) on a NAD;
receiving a request for information mapped to the NADII from at least one wireless device located in a radio coverage of the NAD;
searching for the mapped information based on the NADII, in response to the request; and
transmitting the found information to the wireless device.

48. The method of claim 47, further comprising:
receiving the predetermined information and the NADII from the wireless device.

49. The method of claim 47, wherein the predetermined information comprises at least one of Identification Information (II), indices indicating a location of information, a tag, an icon, a Universal Resource Locator (URL) and contents comprising a character, a number, a symbol, voice, sound, an image, or an arbitrary combination of images.

50. The method of claim 49, wherein the II comprises at least one of a user identifier, a username, a file identifier, a file name, a protocol identifier, a protocol name, a server identifier, a server name, an application service identifier, an application service name, an application service server identifier (identifier for an application service server), an application service server name, and IP addresses of an application service server.

51. The method of claim 50, wherein an application service comprises at least one of a web service, a printing service, a file storage service, a file transmission and sharing service, a cloud service, a home networking service, a Near Field Communication (NFC) service, a coupon providing service, a ticket providing service, and a remote access service.
